# EUROPÄISCHE PATENTANMELDUNG

(11) **EP 2 679 475 A1**
(43) Veröffentlichungstag der Anmeldung: **01.01.2014**
(21) Anmeldenummer: 12174390.0
(22) Anmeldetag: 29.06.2012
(51) Int. Cl.: B62D 65/18

(54) **Abstützvorrichtung für Fahrzeugkarosserien von verschiedenen Länge**

(71) Anmelder: Siemens Aktiengesellschaft, 80333 München (DE)
(72) Erfinder: Desor, Alexander, 07318 Saalfeld (DE); Halupka, Rolf, 07334 Kamsdorf (DE); Knopf, Jens, 07318 Saalfeld (DE); Martin, Hartmut, 07318 Saalfeld (DE); Schmidt, Joachim, 07381 Pößneck (DE)

(57) **Zusammenfassung**

Die Erfindung betrifft eine Abstützvorrichtung für Fahrzeugkarosserien, die zumindest 4 mit einem Grundgestell (2) verbundenen oder auf einem Bodenelement montierbaren Karosserieaufnahmevorrichtungen (1) umfaßt, die jeweils einer Stütz- oder Spannstelle (31) an einer Fahrzeugkarosserie (3) zugeordnet sind. Die Karosserieaufnahmevorrichtungen (1) weisen jeweils einen in einem Trägerelement (12) gelagerten und durch eine Antriebseinheit (14) beweglichen Drehteller (13) auf, dessen Drehachse sich horizontal oder vertikal erstreckt. Darüber hinaus umfassen die Karosserieaufnahmevorrichtungen (1) jeweils eine Mehrzahl in Umfangsrichtung verteilt am Drehteller (13) befestigten Aufnahmeelementen (15), die jeweils einen unterschiedlich geformten, dimensionierten bzw. positionierten Aufnahmekopf (16) aufweisen. Der Aufnahmekopf (16) ist durch Drehung des Drehtellers (13) in Kontakt mit einer zugeordneten Stütz- oder Spannstelle (31) an einer Fahrzeugkarosserie (3 bringbar. Des weiteren ist zumindest eine Längspositioniervorrichtung an einem Paar von Karosserieaufnahmevorrichtungen (1) vorgesehenen. Durch die Längspositioniervorrichtung ist ein Paar von Karosserieaufnahmevorrichtungen zur Anpassung an unterschiedliche Karosserielängen am Grundgestell oder auf dem Bodenelement in Karosserielängsrichtung synchron verfahrbar.

## Beschreibung

Die Erfindung betrifft eine mit Fahrzeugtransportvorrichtungen zusammenwirkenden Abstützvorrichtung für Fahrzeugkarosserien innerhalb einer Fertigungszelle, die beispielsweise einer Produktionsstraße zugeordnet ist.

Bisherige Abstützvorrichtungen für Fahrzeugkarosserien innerhalb einer Fertigungszelle sind maximal für zwei unterschiedliche Fahrzeugtypen ausgelegt. Dabei erfolgt eine Umstellung einer Abstützvorrichtung mittels einer Punkt-zu-Punkt-Verschiebeeinheit. Bei einer größeren Anzahl unterschiedlicher Fahrzeugtypen würde dies zu sehr langen Umrüstzeiten führt. Aus diesem Grund wird bislang von einer Realisierung entsprechender Ansätze in Fertigungslinien abgesehen.

Zur Optimierung von Fertigungs- oder Transportabläufen werden in Fahrzeugmontageeinrichtungen seit Jahrzehnten Fördersysteme verwendet. Durch die Fördersysteme werden zu fertigende Fahrzeuge, insbesondere Automobile oder Teile davon, von einer Arbeitsstation zur nächsten transportiert. Weit verbreitet sind Boden- und Hängefördersysteme.

Üblicherweise werden zu montierende Fahrzeugteile mittels Hängeförderern transportiert. Stark verbreitet sind Elektrohängebahnen. Aus DE 31 46 807 A1 ist ein Fördersystem bekannt, bei der eine Kraftfahrzeugkarosserie zum Transport an Trägern aufgehängt ist.

Bekannte Hängefördersysteme umfassen entweder Kettenförderer, "Power & Free" Förderer oder Elektrohängebahnen. "Power & Free" Fördersysteme weisen ein Zweiebenensystem auf, bei dem in einer oberen Ebene eine Förderkette läuft. In einer unteren Ebene befinden sich von der Förderkette geschleppte Laufwagen. Transportgut läßt sich von der Förderkette trennen. Trotz kontinuierlich laufender Förderkette ist ein diskontinuierlicher Materialfluß möglich. "Power & Free" Fördersysteme lassen jedoch eine nur bedingt flexible Transportweg- bzw. Linienführung und Fördergeschwindigkeitssteuerung zu. Kreisförderer-basierte System ermöglichen weder eine verzweigte Linienführung noch eine flexible Geschwindigkeitssteuerung.

Elektrohängebahnen sind in einem Synchronbetrieb aufwändig zu steuern. Insbesondere sind für jedes Hängebahnfahrzeug eine eigene Fahrzeugsteuerung und mindestens eine Antriebseinrichtung erforderlich. Darüber hinaus können Steigungs- oder Gefällestrecken mit Elektrohängebahnen ohne Schlepphilfe nur mit ausreichender Antriebsleistung und Traktion befahren werden.

In EP 2 316 716 A1 ist eine Transportvorrichtung für eine Fahrzeugmontageeinrichtung mit zumindest einem ersten und zweiten Lasttransportmittel zum Transport zumindest einer hängenden Last entlang eines Transportwegs beschrieben. Die Lasttransportmittel sind entlang des Transportwegs nebeneinander kollisionsfrei bewegbar. Entlang eines ersten Transportwegabschnitts erstreckt sich eine erste Führungsschiene, die zumindest ein Aufnahme- bzw. Stützelement für zumindest ein mit dem ersten Lasttransportmittel verbundenes Rad aufweist, das entlang des Transportwegs mittels einer dem zweiten Lasttransportmittel zugeordneten Motorantriebseinrichtung abrollend bewegbar ist. Außerdem erstreckt sich entlang eines zweiten Transportwegabschnitts im wesentlichen parallel zur ersten Führungsschiene eine zweite Führungsschiene, die zumindest ein Aufnahme- bzw. Stützelement für zumindest ein mit dem zweiten Lasttransportmittel verbundenes Rad aufweist, das entlang des Transportwegs mittels der dem zweiten Lasttransportmittel zugeordneten Motorantriebseinrichtung abrollend bewegbar ist. Eine solche Transportvorrichtung ist auch aus EP 0 379 207 A2 bekannt.

EP 2 298 631 A1 offenbart eine Transportvorrichtung für eine Fahrzeugmontageeinrichtung mit einem auf einer Transportebene verfahrbaren Grundelement. Dabei sind zumindest zwei mit dem Grundelement verbundenen Sockelelementen vorgesehen, die jeweils um eine zur Transportebene senkrechte Drehachse drehbar sind. Mit einem Sockelelement ist zumindest jeweils ein Trägerelement zur Fahrzeugkarosserieaufnahme verbunden, das exzentrisch zur Drehachse des Sockelelements bewegbar ist.

Aus EP 1 810 868 A1 ist ein Fördersystem mit mindestens einer Laufschiene bekannt, an der mindestens ein Laufwagen oder ein Fördergutträger längs einer Förderstrecke geführt bewegbar ist. Dabei enthalten die Laufwagen mindestens einen Laufwagenkopf, mit dem sich dieser auf der Laufschiene abstützt. Der Laufwagenkopf besitzt einen Rahmenteil, in dem mindestens zwei Laufrollen drehbar befestigt sind. Die Laufschiene besteht dabei mindestens aus einem Längsprofil, das mindestens zwei seitlich auskragende Laufflächenteile zur Abstützung der Laufrollen aufweist. Die Laufschiene ist als Systemschiene ausgebildet, die mindestens zwei Führungskanäle zur Aufnahme von Antriebselementen oder Ankoppelelementen enthält und Aufnahmemittel mindestens zur Aufnahme von Stromzuführungsschienen aufweist. Dabei ist der Rahmenteil als Längsprofilträger ausgebildet, der mindestens zwei Längskammern zur Aufnahme der Laufrollen und mindestens eine mittlere Längskammer zur Aufnahme von Ankoppel- oder Antriebselementen enthält.

In WO 2008/095634 A1 ist eine schienengebundene Förderanlage beschrieben, die mit einem selbstfahrenden Fahrgestell ausgerüstet ist. Das Fahrgestell weist mindestens ein von einem Motor antreibbares und mit einer Schiene zusammenwirkendes Reib- bzw. Zahnrad sowie einen Lastenträger auf. Die Schiene ist - bezogen auf eine horizontale Anordnung - im Querschnitt aufrecht stehend ausgebildet und angeordnet. Das Fahrgestell ist im Wesentlichen seitlich der Schiene angeordnet. Des Weiteren stützt sich das Fahrgestell mit oberen und unteren, Querkräfte aufnehmenden Rädern und weiteren, Vertikalkräfte aufnehmenden Rädern an der Schiene ab. Der Lastenträger ist auf einer der Schiene abgewandten Seite sowie um eine senkrecht zur Ebene der Schiene ausgerichteten Achse verschwenkbar am Fahrgestell angeordnet. Die Schiene weist an der Oberseite ein nach oben offenes U-Profil für die oberen Räder und an der Unterseite ein nach unten offenes U-Profil für die unteren Räder zur Aufnahme der Querkräfte auf. Außerdem weist die Schiene ein seitliches gegen das Fahrgestell offenes U-Profil für weitere Räder zur Aufnahme der Vertikalkräfte auf. Dabei sind die Räder als Laufräder ausgebildet.

Aus DE 10 2008 031153 A1 ist ein Schienensystem bekannt, bei dem Schienenstöße durch ein Verbindungselement überbrückt werden. Dabei sind Schienenenden fluchtend zueinander ausgerichtet und in Schienenrichtung verschiebbar. Schienen und Verbindungselement sind derart ausgebildet, dass in Laufflächen am Schienenstoß keine Unterbrechung entsteht.

In DE 20 2009 011398 U1 ist ein Fahrzeug einer Hängeförderbahn beschrieben, die mindestens einen Laufwagen umfasst. Der mindestens eine Laufwagen weist einen Trägerrahmen mit Rollen zum Abrollen auf einer Förderschiene auf. Der Trägerrahmen ist als Blechumformteil mit mindestens einem umgeformten Trägerblech ausgeführt und bildet dabei mindestens einen geschlossenen Hohlquerschnitt.

Der vorliegenden Erfindung liegt die Aufgabe zugrunde, eine Abstützvorrichtung für Fahrkarosserien in einer Fertigungszelle zu schaffen, die gegenüber bestehenden Lösungen eine Aufnahme von Karosserien unterschiedlicher Fahrzeugtypen bei deutlich reduzierten Umrüstzeiten ermöglicht.

Diese Aufgabe wird erfindungsgemäß durch eine Abstützvorrichtung mit den in Anspruch 1 angegebenen Merkmalen gelöst. Vorteilhafte Weiterbildungen der vorliegenden Erfindungen sind in den abhängigen Ansprüchen angegeben.

Die erfindungsgemäße Abstützvorrichtung für Fahrzeugkarosserien umfaßt zumindest 4 mit einem Grundgestell verbundenen oder auf einem Bodenelement montierbaren Karosserieaufnahmevorrichtungen, die jeweils einer Stütz- oder Spannstelle an einer Fahrzeugkarosserie zugeordnet sind. Die Karosserieaufnahmevorrichtungen umfassen jeweils zumindest ein mit dem Grundgestell verbundenes oder auf dem Bodenelement montierbares Fußelement. Außerdem weisen die Karosserieaufnahmevorrichtungen jeweils einen in einem Trägerelement gelagerten und durch eine Antriebseinheit beweglichen Drehteller auf, dessen Drehachse sich horizontal oder vertikal erstreckt. Darüber hinaus umfassen die Karosserieaufnahmevorrichtungen jeweils eine Mehrzahl in Umfangsrichtung verteilt am Drehteller befestigten Aufnahmeelementen, die jeweils einen unterschiedlich geformten, dimensionierten bzw. positionierten Aufnahmekopf aufweisen. Der Aufnahmekopf ist durch Drehung des Drehtellers in Kontakt mit einer zugeordneten Stütz- oder Spannstelle an einer Fahrzeugkarosserie bringbar. Beispielsweise können die Aufnahmeköpfe fahrzeugtypspezifisch unterschiedlich gestaltet sein. Des weiteren ist zumindest eine Längspositioniervorrichtung an einem Paar von Karosserieaufnahmevorrichtungen vorgesehenen. Durch die Längspositioniervorrichtung ist ein Paar von Karosserieaufnahmevorrichtungen zur Anpassung an unterschiedliche Karosserielängen am Grundgestell oder auf dem Bodenelement in Karosserielängsrichtung synchron verfahrbar. Insgesamt ermöglicht die erfindungsgemäße Abstützvorrichtung eine flexible Fertigung unterschiedlicher Fahrzeugtypen in einer Fertigungszelle ohne nennenswerte Umrüstzeiten und nachteilige Auswirkungen auf Produktionszeiten.

Vorteilhafterweise ist durch Rotation eines Drehtellers ein Aufnahmeelement für einen Kontakt mit einer zugeordneten Stütz- oder Spannstelle an einer Fahrzeugkarosserie auswählbar. Dies ermöglicht eine besonders schnelle Umrüstung auf einen anderen Fahrzeugtyp. Darüber hinaus kann ein Hub-/Senkförderer vorgesehen sein, der für eine Übernahme einer Fahrzeugkarosserie aus einer benachbarten Fertigungszelle sowie für ein Absetzen und Anheben einer Fahrzeugkarosserie auf bzw. von der Abstützvorrichtung ausgestaltet ist. Damit können nicht nur in einer Fertigungszelle unterschiedliche Fahrzeugtypen bearbeitet werden, sondern grundsätzlich auch entlang einer kompletten Fertigungslinie.

Entsprechend einer vorteilhaften Weiterbildung der vorliegenden Erfindung sind die zumindest 4 Karosserieaufnahmevorrichtungen mit einem in Karosserielängsrichtung teleskopierbaren Grundgestell verbunden. Dabei ist die Längspositioniervorrichtung durch einen Teleskopmechanismus des Grundgestells gebildet. Dies ermöglicht eine besonders platzsparende und kostengünstige Realisierung einer Abstützvorrichtung für Fahrzeugkarosserien unterschiedlicher Fahrzeugtypen.

Die den Drehtellern zugeordneten Antriebseinheiten können beispielsweise durch einen Zentralantrieb gebildet sein. Dies ermöglicht eine inhärente Synchronisierung der einzelnen Karosserieaufnahmevorrichtungen. Alternativ dazu kann den Drehtellern jeweils ein Elektromotor oder Getriebemotor als individueller Antriebseinheit zugeordnet sein. Dies ermöglicht eine besonders kostengünstige Realisierung. Entsprechend einer anderen Ausgestaltung der erfindungsgemäßen Abstützvorrichtung sind die den Drehtellern zugeordneten Antriebseinheiten pneumatisch. Dies ermöglicht eine einfache stufenlose Verstellung der Drehteller mit den Karosserieaufnahmevorrichtungen. Somit kann durch eine bloße Verstellung der Drehteller bei grundsätzlich denselben ausgewählten Karosserieaufnahmevorrichtungen eine Anpassung an einen anderen Fahrzeugtyp erfolgen.

Die vorliegende Erfindung wird nachfolgend an einem Ausführungsbeispiel anhand der Zeichnung näher erläutert. Es zeigt
- Figur 1: eine Abstützvorrichtung für Fahrzeugkarosserien innerhalb einer Fertigungszelle,
- Figur 2: eine perspektivische Darstellung einer Fertigungszelle einer Fertigungslinie mit einer Abstützvorrichtung gemäß Figur 1.

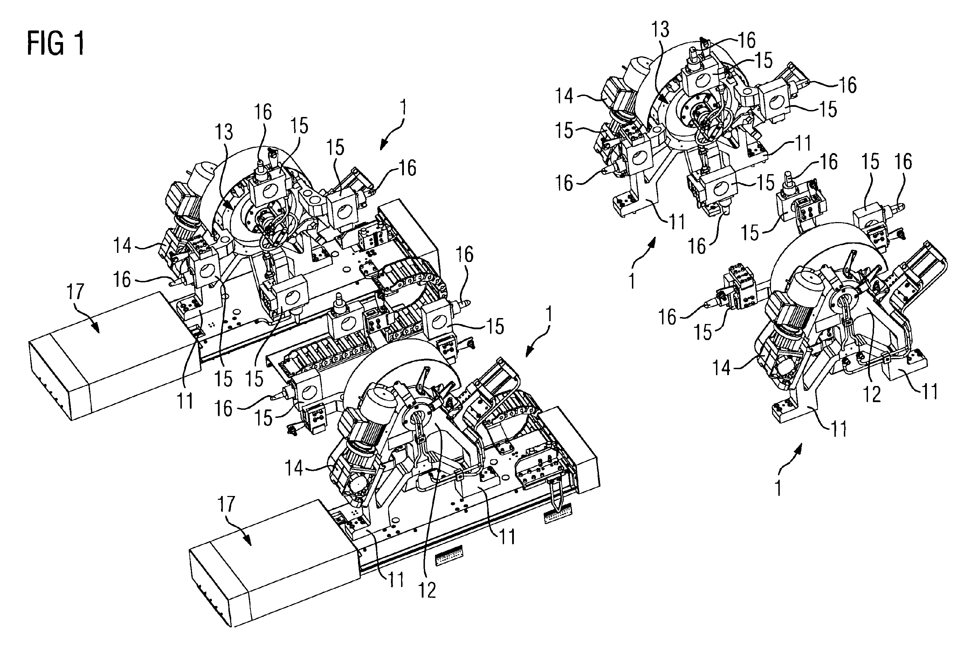

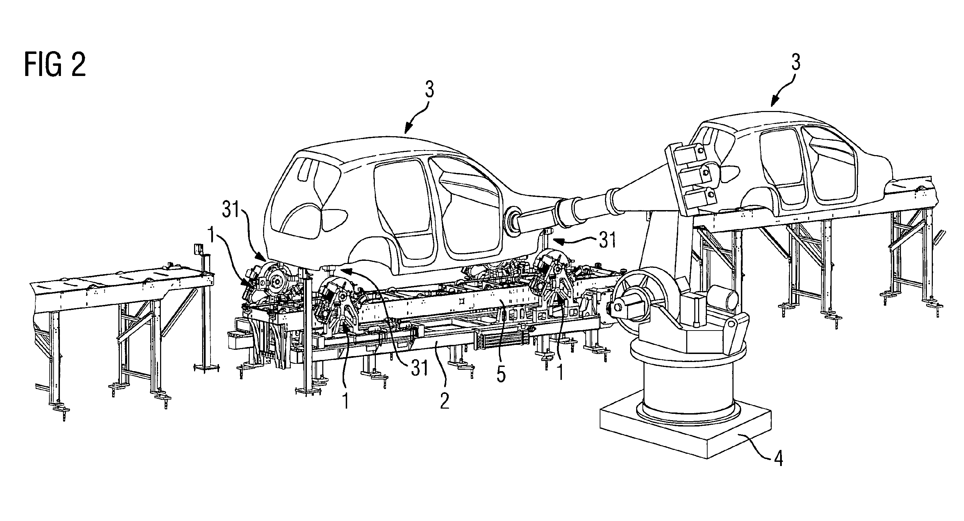

Die in Figur 1 dargestellte Abstützvorrichtung für Fahrzeugkarosserien umfaßt 4 Karosserieaufnahmevorrichtungen 1, die entsprechend Figur 2 jeweils einer Stütz- oder Spannstelle 31 an einer Fahrzeugkarosserie 3 zugeordnet und mit einem Grundgestell 2 verbunden sind. Grundsätzlich können die Karosserieaufnahmevorrichtungen 1 auch direkt auf einem Bodenelement montiert sein. Die Karosserieaufnahmevorrichtungen 1 weisen jeweils 2 am Grundgestell 2 montierbare Fußelemente 11, an die sich ein Trägerelement 12 anschließt. In den Trägerelementen 12 ist jeweils ein Drehteller 13 gelagert, dessen Drehachse sich im vorliegenden Ausführungsbeispiel horizontal in Richtung Karosseriequerachse erstreckt. Grundsätzlich könnte der Drehteller 13 auch so angeordnet sein, daß sich seine Drehachse vertikal in Richtung Karosseriehochachse erstreckt. Die Drehteller 13 sind im vorliegenden Ausführungsbeispiel jeweils durch einen Getriebemotor 14 angetrieben. Alternativ hierzu wären auch ein Zentralantrieb als den Drehtellern zugeordnete Antriebseinheit oder pneumatische Antriebseinheiten möglich.

In Umfangsrichtung verteilt ist an den Drehtellern 13 jeweils eine Mehrzahl von Aufnahmeelementen 15 revolverartig angeordnet, die jeweils einen unterschiedlich geformten, dimensionierten bzw. positionierten Aufnahmekopf 16 aufweisen. Somit können fahrzeugtypspezifisch unterschiedlich gestaltete Aufnahmeköpfe 16 verwendet werden. Durch Drehung des Drehtellers 13 können die Aufnahmeköpfe 16 in Kontakt mit einer zugeordneten Stütz- oder Spannstelle 31 an einer Fahrzeugkarosserie 3 gebracht werden. Beispielsweise kann jeweils ein in 12-Uhr-Stellung am Drehteller 13 befindliches Aufnahmeelementen 15 zur Abstützung einer Fahrzeugkarosserie 3 verwendet werden. Insgesamt wird durch Rotation eines Drehtellers 13 ein Aufnahmeelement 15 für einen Kontakt mit einer zugeordneten Stütz- oder Spannstelle 31 an einer Fahrzeugkarosserie 3 ausgewählt.

Im vorliegenden Ausführungsbeispiel umfaßt die Abstützvorrichtung an einem Paar von Karosserieaufnahmevorrichtungen 1 vorgesehene Längspositioniervorrichtungen 17. Durch die Längspositioniervorrichtungen 17 kann das beispielsweise einer Fahrzeugachse zugeordnete Paar von Karosserieaufnahmevorrichtungen 1 zur Anpassung an unterschiedliche Karosserielängen am Grundgestell in Karosserielängsrichtung synchron verfahren werden. Die Längspositioniervorrichtungen 17 können beispielsweise mittels eines Linearmotors, Ketten-, Spindel oder Zahnstangenantriebs realisiert werden. Alternativ dazu können die 4 Karosserieaufnahmevorrichtungen 1 mit einem in Karosserielängsrichtung teleskopierbaren Grundgestell 2 verbunden werden, wobei die Längspositioniervorrichtungen 17 durch einen Teleskopmechanismus des Grundgestells realisiert werden.

Entsprechend der in Figur 2 dargestellten Fertigungszelle einer Fertigungslinie ist ein Hub-/Senkförderer 5 vorgesehen, der für eine Übernahme einer Fahrzeugkarosserie 3 aus einer benachbarten Fertigungszelle sowie für ein Absetzen und Anheben einer Fahrzeugkarosserie 3 auf bzw. von der Abstützvorrichtung ausgestaltet ist. Auf diese Weise kann der Fertigungszelle eine Fahrzeugkarosserie bzw. ein Fahrzeug zur Bearbeitung beispielsweise mittels eines Roboters 4 zugeführt werden, wobei die Fahrzeugkarosserie 31 während der Bearbeitung durch die Abstützvorrichtung gehalten wird. Nach der Bearbeitung wird die Fahrzeugkarosserie 3 mittels des Hub-/Senkförderers 5 von der Abstützvorrichtung angehoben und mittels eines Längsförderers einer nachgelagerten Fertigungszelle zugeführt. Danach kann die Abstützvorrichtung, falls erforderlich, rasch durch Rotation der Drehteller 13 und Betätigung der Längspositioniervorrichtungen 17 auf einen anderen Fahrzeugtyp eingestellt werden.

Die Merkmale der vorangehend beschriebenen Ausführungsbeispiele können sowohl einzeln als auch in beschriebener Kombination miteinander realisiert sein.

## Patentansprüche

1. Abstützvorrichtung für Fahrzeugkarosserien mit
- zumindest 4 mit einem Grundgestell verbundenen oder auf einem Bodenelement montierbaren Karosserieaufnahmevorrichtungen, die jeweils einer Stütz- oder Spannstelle an einer Fahrzeugkarosserie zugeordnet sind sowie
- zumindest ein mit dem Grundgestell verbundenes oder auf dem Bodenelement montierbares Fußelement,
- einen in einem Trägerelement gelagerten und durch eine Antriebseinheit beweglichen Drehteller, dessen Drehachse sich horizontal oder vertikal erstreckt, und
- eine Mehrzahl in Umfangsrichtung verteilt am Drehteller befestigten Aufnahmeelementen umfassen, die jeweils einen unterschiedlich geformten, dimensionierten und/oder positionierten Aufnahmekopf aufweisen, der durch Drehung des Drehtellers in Kontakt mit einer zugeordneten Stütz- oder Spannstelle an einer Fahrzeugkarosserie bringbar ist,
- zumindest einer an einem Paar von Karosserieaufnahmevorrichtungen vorgesehenen Längspositioniervorrichtung, durch die ein Paar von Karosserieaufnahmevorrichtungen zur Anpassung an unterschiedliche Karosserielängen am Grundgestell oder auf dem Bodenelement in Karosserielängsrichtung synchron verfahrbar ist.

2. Abstützvorrichtung nach Anspruch 1,
bei der die Aufnahmeköpfe fahrzeugtypspezifisch unterschiedlich gestaltet sind.

3. Abstützvorrichtung nach einem der Ansprüche 1 oder 2,
bei der durch Rotation eines Drehtellers ein Aufnahmeelement für einen Kontakt mit einer zugeordneten Stütz- oder Spannstelle an einer Fahrzeugkarosserie auswählbar ist.

4. Abstützvorrichtung nach einem der Ansprüche 1 bis 3,
bei der ein Hub-/Senkförderer vorgesehen ist, der für eine Übernahme einer Fahrzeugkarosserie aus einer benachbarten Fertigungszelle sowie für ein Absetzen und Anheben einer Fahrzeugkarosserie auf bzw. von der Abstützvorrichtung ausgestaltet ist.

5. Abstützvorrichtung nach einem der Ansprüche 1 bis 4,
bei der die zumindest 4 Karosserieaufnahmevorrichtungen mit einem in Karosserielängsrichtung teleskopierbaren Grundgestell verbunden sind, und bei der die Längspositioniervorrichtung durch einen Teleskopmechanismus des Grundgestells gebildet ist.

6. Abstützvorrichtung nach einem der Ansprüche 1 bis 5,
bei der die den Drehtellern zugeordneten Antriebseinheiten durch einen Zentralantrieb gebildet sind.

7. Abstützvorrichtung nach einem der Ansprüche 1 bis 5,
bei der die den Drehtellern jeweils ein Elektromotor oder Getriebemotor als individueller Antriebseinheit zugeordnet ist.

8. Abstützvorrichtung nach einem der Ansprüche 1 bis 5,
bei der die den Drehtellern zugeordneten Antriebseinheiten pneumatisch sind.
